Europäisches Patentamt

European Patent Office

Office européen des brevets

(11) Numéro de publication: **0 328 429**
**A1**

(12) **DEMANDE DE BREVET EUROPEEN**

(21) Numéro de dépôt: 89400205.4

(22) Date de dépôt: 25.01.89

(51) Int. Cl.4: **H 02 G 11/04**
D 06 F 79/02

(30) Priorité: 09.02.88 FR 8801492

(43) Date de publication de la demande:
16.08.89 Bulletin 89/33

(84) Etats contractants désignés:
AT BE CH DE ES GB GR IT LI LU NL SE

(71) Demandeur: **TECHNIQUE INNOVATION CONCEPT**
**3, rue des Binelles, BP 125**
**F-92312 Sèvres Cédex (FR)**

(72) Inventeur: **Biela, Stanislas**
**14, allée de Kanumera**
**F-91400 Orsay (FR)**

(74) Mandataire: **Bourgognon, Jean-Marie et al**
**Cabinet Flechner 22, Avenue de Friedland**
**F-75008 Paris (FR)**

(54) **Dispositif de guide fil électrique appelé cordon des fers à repasser.**

(57) La présente invention concerne un dispositif de guide fil
électrique "appelé" cordon des fers à repasser.

L'objet de l'invention est de fournir un dispositif guide fil, qui
permet à la fois, d'éviter la chute du fer et facilite le repassage
car le fil ne gène en aucun cas.

Ce dispositif comporte un axe horizontal sur lequel sont
disposés de façon tournante des galets (4). L'axe étant monté
sur un bâti pourvu à sa base de moyens de fixation (5) sur le
support de fer de table à repasser, latéralement et au-dessus
de l'axe de moyen de retenue du cordon électrique empêchant
celui-ci de s'échapper de l'appui sur les galets.

FIG.7

**Description**

## DISPOSITIF DE GUIDE ELECTRIQUE "APPELE" CORDON DES FERS A REPASSER

La présente invention concerne un dispositif de guide fil électrique "appelé" cordon des fers à repasser.

L'objet de l'invention est de fournir un dispositif, guide fil, qui permet à la fois d'éviter la chute du fer et facilite le repassage car le fil ne gène en aucun cas.

Ce dispositif, selon une 1ère caractéristique, comporte un axe horizontal sur lequel sont disposés de façon tournante des galets, l'axe étant monté sur bâti pourvu : à sa base, de moyens de fixation sur le support de fer de table à repasser ; latéralement et au-dessus de l'axe, de moyens de retenue du cordon électrique empêchant celui-ci de s'échapper de l'appui sur les galets.

Selon d'autres caractéristiques le bâti est constituée selon un mode préférentiel de réalisation en U "retourné".

Les moyens de fixation sont constitués de prolongement à l'équerre des montants du bâti sous lesquels sont fixés des moyens d'attache rapide, pinces ou clips.

La partie supérieure du bâti peut être cintrée vers le haut en partie centrale pour dégager une ouverture suffisante pour le passage de la prise du cordon.

L'axe est reçu dans des trous en vis à vis des montants.

Les bras parallèles horizontaux supportent les pinces ou clips, ceux-ci ayant comme longueur maximum celle des supports de fer.

Les galets sont de préférence en plastique par exemple type "Nylon" et sont pourvus de légers chanfreins extérieurs et de chanfreins plus importants, au milieu, de chaque côté de l'alésage pour limiter portée et frottement.

Le bâti peut être de diverses matières, acier, fer, inox, laiton, aluminium.

La base de cette invention ce sont les galets sur l'axe.

AVANTAGES :

1/ Moins de fatigue car le fil est totalement libre.

2/ Gain de temps donc économie d'énergie, car le fil n'est pas en contact avec le linge, ainsi ne se déplace pas, ne roule pas sur celui-ci.

3/ Le fil ne s'use pratiquement pas.

4/ Le fil n'use pas la housse.

5/ La sécurité : le fer ne risque pas de tomber du fait que ce dispositif est constitué des montants et de l'axe transversal, celui-ci est donc retenu.

LE DISPOSITIF VU SUR LE PLAN

Fourni à titre d'illustration, correspond de façon non limitative à :

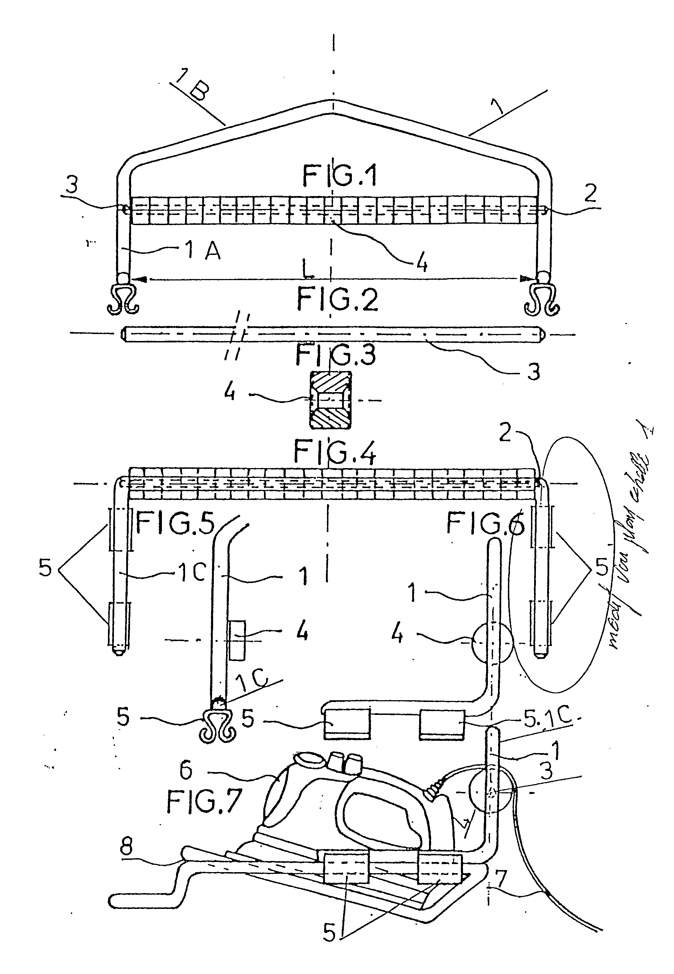

FIG. 1 : Une vue de face du dispositif avec :
Détail (1) : Supports des galets réalisés en aluminium ; diamètre et longueur L suivant modèle des supports de fer existant.
Détail (2) : Deux trous diamètre 4 mm de réception de l'axe des galets.
Détail (3) : Axe diamètre 4 mm (supporte les galets)
Détail (4) : Galets en plastique

FIG. 2 : Une vue de l'axe détail (3) diamètre 4 mm en laiton.

FIG. 3 : Une vue en coupe d'un galet détail (4) en plastique sur diamètre extérieur 16 mm, diamètre intérieur 4,5 mm,
2 chanfreins extérieurs 0,1 à 0,2 mm maxi à 45°
2 chanfreins intérieurs 1,5 mm à 45° - Longueur 10 mm.

FIG. 4 : Une vue au dessus du dispositif faisant apparaître les 2 bras de fixation (1-C) du bâti (1) avec pinces (5) et les deux trous (2).

FIG. 5 : Une vue de face partielle agrandie faisant apparaître le montant (1-B) du support avec galets (4) disposés à mi-hauteur du montant (1-C).

FIG. 6 : Vue de côté du dispositif montrant la forme en équerre.

FIG. 7 : Une vue du dispositif adapté sur un support (8) existant sur toutes les tables à repasser, le fer à repasser (6) étant alimenté par le cordon (7) passant sur galets (4) retenus par les montants (1B) et la partie supérieure (1C). Du fait que les galets sont en grand nombre, cela permet au cordon (7) de glisser facilement.

**Revendications**

1/ Dispositif de guide fil électrique "appelé" cordon des fers à repasser caractérisé en ce qu'il comporte un axe horizontal (3) sur lequel sont disposés de façon tournante des galets (4), l'axe (3) étant monté sur un bâti (1) pourvu : à sa base, de moyens de fixation (5) sur le support de fer de table à repasser ; latéralement et au dessus de l'axe, de moyens de retenue (1B) du cordon électrique (7) empêchant celui-ci de s'échapper de l'appui sur les galets (4).

2/ Dispositif selon revendication 1 caractérisé en ce que le bâti (1) est constitué en U "retourné" et en ce que les moyens de fixation sont constitués de prolongement (1c) à l'équerre des montants (1A) du bâti (1) sous lesquels sont fixés des moyens d'attache rapide, pinces ou clips (5).

3/ Dispositif selon revendication 2 caractérisé en ce que la partie supérieure (1B) du bâti est cintrée vers le haut en partie centrale pour dégager une ouverture suffisante pour le passage de la prise du cordon.

4/ Dispositif selon revendication 2 caractérisé en ce que l'axe (3) est reçu dans des trous (2) en vis à vis des montants (1A).

5/ Dispositif selon revendication 2 caractérisé en ce que les bras parallèles horizontaux supportent les pinces ou clips, ont une longeur au maximum égale à celle des supports de fer.

6/ Dispositif selon revendication 1 caractérisé en ce que les galets (4) sont en plastique par exemple type "Nylon" et sont pourvus de légers chanfreins extérieurs et de chanfreins plus importants, au milieu, de chaque côté de l'alésage pour limiter portée et frottement.

EP 0 328 429 A1

FIG.1

FIG.2

FIG.3

FIG.4

FIG.5

FIG.6

FIG.7

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| A | US-A-3 082 983  (S.J. KALLER)<br>* Figure 1 *<br>--- | 1 | H 02 G  11/04<br>D 06 F  79/02 |
| A | US-A-3 443 780  (L.P. BRUENING)<br>* Figure 1 *<br>--- | 1 | |
| A | DE-C-  824 357  (W. KANNHAUSER)<br>--- | | |
| A | US-A-2 179 701  (P.W. ROM)<br>--- | | |
| A | US-A-2 504 005  (E.R. DAVIS)<br>--- | | |
| A | US-A-2 539 804  (H. ADAMEC)<br>----- | | |

DOMAINES TECHNIQUES
RECHERCHES (Int. Cl.4)

D 06 F
H 02 G

Le présent rapport a été établi pour toutes les revendications

| Lieu de la recherche | Date d'achèvement de la recherche | Examinateur |
|---|---|---|
| LA HAYE | 16-05-1989 | D HULSTER E.W.F. |